**Europäisches Patentamt**

**European Patent Office**

**Office européen des brevets**

(11) Veröffentlichungsnummer : **0 376 115 B1**

(12) **EUROPÄISCHE PATENTSCHRIFT**

(45) Veröffentlichungstag der Patentschrift :
**05.08.92 Patentblatt 92/32**

(21) Anmeldenummer : **89123409.8**

(22) Anmeldetag : **19.12.89**

(51) Int. Cl.⁵ : **F16K 17/04**

(54) **Hydraulisches Sicherheitsventil.**

(30) Priorität : **24.12.88 DE 3843755**

(43) Veröffentlichungstag der Anmeldung :
**04.07.90 Patentblatt 90/27**

(45) Bekanntmachung des Hinweises auf die
Patenterteilung :
**05.08.92 Patentblatt 92/32**

(84) Benannte Vertragsstaaten :
**DE FR GB IT NL SE**

(56) Entgegenhaltungen :
**DE-A- 2 748 107**
**DE-B- 1 248 402**
**US-A- 3 760 845**

(73) Patentinhaber : **BARMAG AG**
**Leverkuser Strasse 65 Postfach 11 02 40**
**W-5630 Remscheid 11 (DE)**

(72) Erfinder : **Eich, Otwin, Dr.**
**Garschager Strasse 4**
**W-5630 Remscheid 11 (DE)**
Erfinder : **Kahl, Horst**
**Karl-Evang-Strasse 1**
**W-5630 Remscheid 1 (DE)**
Erfinder : **Salz, Franz-Peter, Dipl.-Ing.**
**Lindenstrasse 11**
**W-5466 Neustadt/Wied (DE)**

(74) Vertreter : **Pfingsten, Dieter, Dipl.-Ing.**
**Barmag AG Leverkuser Strasse 65 Postfach**
**110240**
**W-5630 Remscheid 11 (DE)**

EP 0 376 115 B1

## Beschreibung

Die Erfindung betrifft ein hydraulisches Sicherheitsventil nach dem Oberbegriff des Anspruch 1.Ein derartiges Ventil zählt zum allgemein bekannten Stand der Technik.

Derartige Sicherheitsventile sind bisher nicht in speziellen Ausführungen bekannt. Es werden vielmehr hydraulisch angesteuerte Wegeventile benutzt, die in Schieberbauweise ausgeführt sind. Die hydraulische Ansteuerung des Sicherheitsventils erfolgt über eine Meßleitung zum hydraulischen Kraftgeber, dessen Sicherheit überwacht wird. Durch die hydraulische Ansteuerung wird das Sicherheitsventil so geschaltet, daß eine hydraulische Verbindung über einen Steueranschluß zu dem Betätigungsventil für den Kraftgeber hergestellt wird. Hierdurch wird eine Sicherheitsfunktion gesteuert, z.B. das Betätigungsventil für den Kraftgeber ganz oder teilweise außer Funktion gesetzt. In seiner Ruhestellung ist über das Sicherheitsventil eine Verbindung zwischen dem Steueranschluß des Betätigungsventils und dem Tank hergestellt.

Das in der DE-A-27 48 107 beschriebene Differenzdruckbegrenzungsventil ist ein Rückschlagventil, durch das es möglich sein soll, zwischen den Zylinderkammern eines Arbeitszylinders eine in der Höhe einstellbare Druckdifferenz zu halten, indem es bei Überschreiten des als Grenzwert der Druckdifferenz zwischen den Kammern eingestellten Öffnungsdruckes den Überdruck in der zu entlastenden Kammer auf die vorgesehene Druckdifferenz zurückführt. Durch eine die Stirnfläche eines Lagerzapfens des Ventilkolbens in Schließrichtung belastende Federkraft sowie durch eine auf dieselbe Stirnfläche wirksame hydraulische Kraft ist die zum Öffnen des Ventils aufzubringende Kraft einstellbar. Das beschriebene Ventil wirkt nur einseitig. Bei einer Weiterbildungsform ist für den Fall der Wechselbelastung vorgesehen, zwei baugleiche Differenzdruckbegrenzungsventile zu einer Wechselschaltung zusammenzufassen.

Es ist Aufgabe der Erfindung, ein derartiges Sicherheitsventil so auszugestalten, daß es die Sicherheitsschaltstellung sicher einnimmt, wenn der Meßdruck den zulässigen Wert überschreitet, daß es schnell schaltet und daß es Leckagefrei ist, so daß über das Sicherheitsventil kein Druckabbau in dem hydraulischen Kraftgeber eintritt.

Die Lösung der Aufgabe ergibt sich aus dem Kennzeichen des Anspruch 1.

Die hydraulische Abschaltung des Dauerkraftgebers erfolgt dabei zweckmäßigerweise durch den Meßdruck des hydraulischen Kraftgebers, indem z.B. ein Widerlager des Dauerkraftgebers hydraulisch derart entfernt wird, daß der Dauerkraftgeber außer Funktion tritt.

Eine eindeutige, sichere Schaltung wird durch die Ausgestaltung nach Anspruch 2 erreicht.
Dabei wird der Ventilkörper dem Kolben durch die Strömungsverhältnisse in der Ventilkammer im allgemeinen sicher nachfolgen.

Eine ständige Anlage des Ventilkörpers an dem Kolben wird nach Anspruch 3 erreicht.
Diese Feder kann schwach und mit einer geringen Vorspannkraft von. z.B. 1 N vorgespannt sein.

Ein sehr genaues und schnelles Ansprechen des Sicherheitsventils bei Überschreiten zulässigen Druckes wird durch die Ausgestaltung nach Anspruch 4 erzielt.

Eine Ausführung mit einer schnellen, sicheren Rückschaltung, d.h. Ausschaltung der Sicherheitsfunktion ergibt sich aus Anspruch 5.

Anspruch 6 kennzeichnet eine bevorzugte konstruktive Ausbildung, bei der der Dauerkraftgeber und die Einrichtung zur hydraulischen Abschaltung des Dauerkraftgebers besonders funktionsgerecht in das Sicherheitsventil integriert sind. Dabei ergibt sich die besonders bevorzugte Ausführung nach Anspruch 7, durch welche in der Sicherheitsschaltstellung die Abschaltung des Dauerkraftgebers außer Funktion gesetzt wird. Dies trägt dazu bei, daß das Sicherheitsventil eindeutig und schnell aus der Sicherheitsschaltstellung in die Ruheschaltstellung umschaltet, wenn der Meßdruck des überwachten Kraftgebers den voreingestellten Grenzwert unterschreitet.

Durch die nach den Unteransprüchen vorgesehene Dimensionierung der Sitze und der Kolbenflächen für die Abschaltung des Dauerkraftgebers wird zwar eine Schalthysterese derart bewirkt, daß für die Einschaltung der Sicherheitsschaltstellung ein höherer Meßdruck erforderlich ist als für die Ausschaltung der Sicherheitsschaltstellung. Diese Hysterese kann z.B. 30 bar betragen. Diese Hysterese ist jedoch gewünscht, um einen unstabilen Betrieb des Kraftgebers zu vermeiden. Insbesondere soll vermieden werden, daß die Sicherheitsfunktion dann schon ausgeschaltet wird, wenn der Arbeitsdruck des hydraulischen Kraftgebers noch in einem kritischen Bereich liegt.

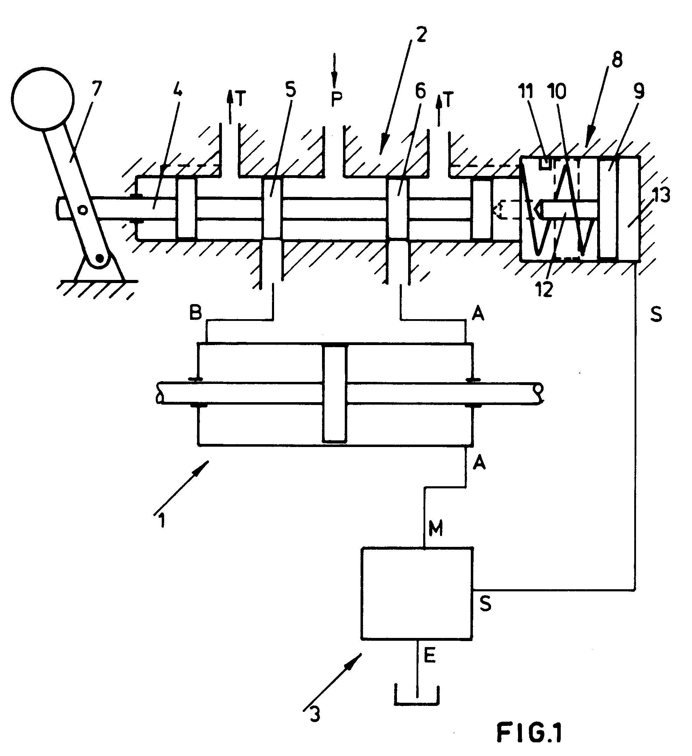

Im folgenden wird ein Ausführungsbeispiel der Erfindung beschrieben.
Es zeigen:
Fig. 1 das Schaltschema für die hydraulische Ansteuerung eines hydraulischen Kraftgebers;
Fig. 2 das Schnittbild durch ein Sicherheitsventil.
Der Verbraucher 1 ist in dem in Fig. 1 dargestellten Ausführungsbeispiel eine Zylinder-Kolben-Einheit. Der Kolben wird über Anschlüsse A und B wahlweise mit Druck beaufschlagt bzw. druckentlastet. Es wird angenommen, daß die Druckbelastung der Seite A kritisch ist. Daher ist die Seite A über Meßleitung M mit dem Sicherheitsventil 3 dieser Erfindung verbunden. Dieses Sicherheitsventil tritt erst in Funktion, wenn der Druck auf der Seite A einen bestimmten voreingegebenen Wert überschreitet. Hierauf wird später eingegangen.

Zur Steuerung des Verbrauchers dient das Betätigungsventil 2. Hierbei handelt es sich um ein Schieberventil mit einem Steuerschieber 4. Die Steuerbunde 5 und 6 überdecken jeweils den Anschluß A und B und steuern hierdurch eine Verbindung der Anschlüsse A und B einerseits zur Pumpe und andererseits zum Tank. Der Steuerschieber 4 wird durch Handhebel 7 in beiden Verschieberichtungen betätigt. Es ist jedoch ein hydraulischer Ausschalter 8 an dem freien Ende des Steuerschiebers 4 vorgesehen. Dieser Ausschalter erfüllt in diesem Ausführungsbeispiel die Sicherheitsfunktion. Dabei handelt es sich um einen Kolben 9, der in einem Zylinder verschiebbar ist. Der Kolben 9 besitzt einen Stößel 12. Der Zylinder ist an das Ventilgehäuse des Betätigungsventils 2 koaxial zum Steuerschieber angeflanscht. Der Kolben 9 wird durch eine Feder 10 in eine vom Steuerschieber 4 abgewandte Ruhestellung gedrückt. Durch Druckbeaufschlagung der der Feder 10 gegenüberliegenden Steuerseite 13 des Kolbens 9 wird der Kolben 9 in Richtung auf den Steuerschieber verschoben. Dabei wirkt der Kolben 9 mit seinem auf den Steuerschieber 4 weisenden Stößel mit dem Steuerschieber zusammen und verschiebt den Steuerschieber gegen die Handkraftbetätigung an Hebel 7. Der Weg des Kolbens 9 ist begrenzt durch einen Anschlag 11. Der Anschlag 11 ist so angebracht und der Stößel 12 ist so lang, daß der Steuerschieber 4 in eine Position gebracht wird, in der der Steuerbund 6 den Anschluß A gegenüber der Pumpleitung im wesentlichen abschließt. Wenn also der Kolben 9 an der Steuerseite 13 hydraulisch angesteuert wird, so kann der Steuerschieber 4 nur noch nach einer Seite betätigt werden in der Weise, daß der Verbraucheranschluß B mit der Pumpleitung verbunden und druckbelastet wird, während der Verbraucheranschluß A druckentlastet wird. Eine Bewegung des Steuerschiebers 4 in der anderen Richtung im Sinne einer Druckbeaufschlagung des Verbraucheranschlusses A ist nur gegen die durch den Kolben 9 aufgebrachte Druckkraft möglich und bei entsprechend großer Kolbenfläche des Kolbens 9 unmöglich.

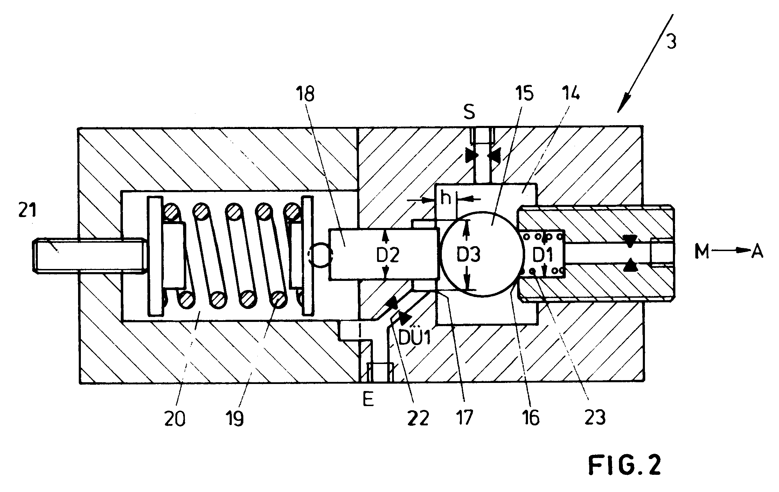

Die Druckbeaufschlagung der Steuerseite 13 des Ausschalters 8 erfolgt - wie gesagt - durch das Sicherheitsventil 3 nach dieser Erfindung. Ein Ausführungsbeispiel dieses Sicherheitsventils ist in Fig. 2 dargestellt. Das Sicherheitsventil ist ein Wechselventil. Der Ventilkörper dieses Wechselventils ist eine Kugel 15. Die Kugel 15 befindet sich in einer Ventilkammer 14. Die Ventilkammer 14 hat drei Anschlüsse, und zwar den Meßanschluß M, den Steueranschluß S und den Entlastungsanschluß E. Der Steueranschluß S ist der bei Wechselventilen übliche Mittelanschluß. Der Meßanschluß M bildet gegenüber der Kugel den Sitz 16 (Meßsitz). Der Entlastungsanschluß bildet gegenüber der Kugel den Sitz 17 (Entlastungssitz). Der Meßsitz 16 und der Entlastungssitz 17 liegen sich konzentrisch gegenüber. Konzentrisch in der Aussparung des Entlastungssitzes 17 ist der Kolben 18 in Richtung des Meßsitzes 16 geführt. Der Kolben 18 wird auf der von der Ventilkammer 14 abgewandten Seite durch eine Feder 19 belastet. Die Feder 19 befindet sich in einer Federkammer, die mit dem Entlastungskanal verbunden ist. Das Widerlager der Feder 19 kann durch eine Einstellschraube verstellt werden. Hierdurch ergibt sich eine einstellbare Vorspannkraft der Feder 19. In der Aussparung des Meßsitzes 16 liegt eine auf die Kugel wirkende Nachführfeder 23, die die Kugel 15 gegen die in die Ventilkammer weisende Stirnseite des Kolbens 18 drückt.

Zur Funktion:

Der Meßanschluß ist - wie bereits gesagt - mit der Verbraucherseite A des Verbrauchers 1 verbunden. Der zulässige Druck auf der Verbraucherseite A ergibt sich durch die mittels Einstellschraube 21 eingestellte Vorspannkraft der Feder 19. Mit dieser Kraft wird die Kugel 15 gegen den Meßsitz 16 gedrückt. Die Kraft der Feder 23 ist demgegenüber unerheblich klein. Wenn der Druck auf der Verbraucherseite A den voreingestellten Wert überschreitet, so hebt die Kugel 15 von ihrem Sitz 16 ab. Dadurch wird die Ventilkammer 14 druckbeaufschlagt mit der Folge, daß gleichzeitig auch der gegenüber der Federkammer 20 abgedichtete Kolben 18 druckbeaufschlagt wird. Durch eine Düse 22 im Entlastungskanal E wird verhindert, daß das Öl aus der Ventilkammer 14 zu schnell abströmt. Daher baut sich in der Ventilkammer 14 bei Abheben der Kugel 15 von dem Meßsitz 16 ein ausreichender Druck auf, um den Kolben 18 gegen die Federkraft 19 aus der Ventilkammer 14 zu verschieben. Die Nachführfeder 23 hält trotzdem die Kugel 15 in Kontakt mit der Kolbenstirnseite, bis die Kugel 15 auf den Entlastungssitz 17 zu liegen kommt und den Entlastungskanal E vollständig abschließt. Dieser Schaltvorgang geht einerseits eindeutig und andererseits sehr schnell vor sich, da der Kolben 18 die Feder 19 hydraulisch außer Funktion setzt. Dabei ist der Kolbendurchmesser D2 vorzugsweise etwas größer als der Durchmesser D1 des Meßsitzes. Hierdurch wird gewährleistet, daß im Augenblick des ersten Abhebens der Kugel von dem Meßsitz 16, wenn relativ geringfügige Ölmengen strömen, die auf den Kolben 18 wirkenden Druckkräfte größer sind als die auf die Kugel 15 wirkende Druckkraft. Die auf den Kolben 18 wirkende Druckkraft ist also eher in der Lage, die Vorspannkraft der Feder 19 zu überwinden, als die auf die Kugel wirkende Druckkraft. Da die Kugel 15 nunmehr den Entlastungssitz 17 absperrt, wird sich in der Ventilkammer 14 lek-

kagefrei der Druck der Verbraucherseite A aufbauen. Über Steuerleitung S wird dieser Druck auf die Steuerseits 13 des hydraulischen Ausschalters 8 gegeben. Dadurch wird der Kolben 9 gegen den Anschlag 11 verschoben, so daß zumindest die weitere Verbindung zwischen Pumpleitung P und Verbraucheranschluß A durch Überdeckung des Steuerbundes 6 unmöglich wird. Daher kann sich in der Verbraucherseits A kein höherer Druck aufbauen, es sei denn Handhebel 7 wird mit Gewalt gegen die hydraulische Kraft am Kolben 9 verschoben. Dadurch, daß das Sicherheitsventil 3 leckfrei ist, wird andererseits verhindert, daß sich der Druck auf der Verbraucherseite unbeabsichtigt vermindert.

Wenn nunmehr - z.B. durch Entlastung des Verbrauchers 1 der Druck auf der Verbraucherseite A unter den kritischen Wert fällt, so reicht der in der Ventilkammer 14 herrschende Druck nicht mehr aus, die Kugel 15 gegen die Kraft der Feder 19 fest auf den Entlastungssitz zu drücken. Daher baut sich unterhalb des Sitzes der auch in der Ventilkammer 14 herrschende Druck auf. Da der Durchmesser D3 des Entlastungssitzes 17 größer ist als der Kolbendurchmesser D2 ergibt sich nunmehr an der Kugel 15 eine zusätzliche Druckkraft, die dazu tendiert, die Kugel 15 vollends von dem Entlastungssitz 17 abzuheben. Diese Druckkraft gemeinsam mit der Vorspannkraft der Feder 19 reicht aus, die Kugel gegen den Meßsitz 16 zu drücken. Es wurde darauf hingewiesen, daß die Durchmesser D1 des Meßsitzes 16, D2 des Kolbens 18, D3 des Entlastungssitzes 17 - in dieser Reihenfolge größer werdend - unterschiedlich sind. Hierdurch wird bedingt, daß der kritische Druck der Verbraucherseite A, bei dem die Sicherheitsfunktion einsetzt, größer ist als der Druck der Verbraucherseits A, bei der die Sicherheitsfunktion wieder ausgesetzt wird. Dieser Unterschied ist jedoch verhältnismäßig klein und beträgt etwa 10% des möglichen Gesamtdruckes. Mit diesem Durchmesserverhältnis wird es jedoch möglich, die Feder 19 sehr stark auszulegen, so daß eine sichere Anlage der Kugel 15 an dem Meßsitz 16 leckagefrei möglich ist. In dieser Situation ist die Ventilkammer 14 und damit auch der Steueranschluß S und die Steuerseite 13 des Ausschalters 8 druckentlastet. Das Betätigungsventil 2 ist daher frei betätigbar.

BEZUGSZEICHENAUFSTELLUNG

1 hydraulischer Kraftgeber
2 Betätigungsventil
3 Sicherheitsventil
4 Steuerschieber
5 Steuerbund
6 Steuerbund
7 Handhebel
8 Ausschalter
9 Kolben
10 Feder
11 Anschlag
12 Stößel
13 Steuerseite
14 Ventilkammer
15 Ventilkörper, Kugel
16 Meßsitz
17 Entlastungssitz
18 Kolben
19 Feder
20 Federkammer
21 Einstellschraube
22 Düse, Drossel
23 Nachführfeder, Abdrückfeder

**Patentansprüche**

1. Hydraulisches Sicherheitsventil (3) zur Erzeugung eines hydraulischen Steuerdrucks zur Auslösung einer Sicherheitsfunktion in Abhängigkeit von dem Arbeitsdruck eines hydraulischen Kraftgebers (1),
das über einen Meßanschluß (M) mit dem hydraulischen Kraftgeber verbunden ist und
das einen hydraulischen Steueranschluß (S) zur Steuerung der Sicherheitsfunktion sowie eine Ventilkammer (14) und einen Entlastungsanschluß (E) zur Verbindung der Sicherheitsventils (3) mit einem System niederen Druckes, z.b. einem Tank, aufweist,

dadurch gekennzeichnet, daß

das Sicherheitsventil (3) ein Wechselventil ist, daß der Steueranschluß (S) in die Ventilkammer (14) des Sicherheitsventils (3) mündet,

und daß der Meßanschluß (M) einerseits sowie der Entlastungsanschluß (E) andererseits durch den Ventilkörper (15) des Sicherheitsventils (3) wechselweise mittels Sitz (Meßsitz 16, Entlastungssitz 17) verschließbar sind,

wobei der Ventilkörper (15) in seiner Ruhestellung durch einen Dauerkraftgeber (Feder 19) gegen den dem Meßanschluß (M) zugeordneten Sitz (16) gedrückt wird und wobei der Dauerkraftgeber (19) hydraulisch durch Druckbeaufschlagung der Ventilkammer (14) abschaltbar ist.

2. Ventil nach Anspruch 1,

dadurch gekennzeichnet, daß

der Dauerkraftgeber (19) sich über einen Kolben (18), dessen Kolbenfläche dem Druck in der Ventilkammer (14) ausgesetzt ist, an dem Ventilkörper (15) abstützt.

3. Ventil nach Anspruch 2,

gekennzeichnet durch

eine Abdrückfeder (23), durch welche der Ventilkörper (15) dem Kolben (18) nachgeführt wird, indem sich die Abdrückfeder (23) im Bereich des Meßsitzes (16) abstützt.

4. Ventil nach Anspruch 2 oder 3,

dadurch gekennzeichnet, daß

die dem Druck in der Ventilkammer (14) ausgesetzte Fläche des Kolbens (18) größer ist als der Meßsitz (16).

5. Ventil nach Anspruch 4,

dadurch gekennzeichnet, daß

der Entlastungssitz (17) größer ist als die dem Druck in der Ventilkammer (14) ausgesetzte Fläche des Kolbens (18).

6. Ventil nach einem der vorangehenden Ansprüche,

dadurch gekennzeichnet, daß

der Dauerkraftgeber eine Feder (19) ist, die in einer druckentlasteten Kammer (20) gelagert ist und deren dem Ventilkörper (15) zugewandte Seite als Kolben (18) ausgebildet ist.

7. Ventil nach Anspruch 6,

dadurch gekennzeichnet, daß

der Kolben (18) derart konzentrisch innerhalb des Entlastungssitzes (17) angeordnet ist, daß er bei auf dem Entlastungssitz (17) aufsitzendem Ventilkörper (15) nicht druckbeaufschlagt ist.

**Claims**

1. Hydraulic safety valve (3) for generating a hydraulic control pressure for triggering a safety function in dependence upon the working pressure of a hydraulic power source (1),

said valve being connected by a measuring connection (M) to the hydraulic power source and

having a hydraulic control connection (S) for controlling the safety function, as well as a valve chamber (14) and a relief connection (E) for connecting the safety valve (3) to a low-pressure system, e.g. a tank,

characterized in that

the safety valve (3) is a shuttle valve, that the control connection (S) opens out into the valve chamber (14) of the safety valve (3),

and that the measuring connection (M) on the one hand and the relief connection (E) on the other hand are closable by the valve body (15) of the safety valve (3) alternately with the aid of a seat (measuring seat 16, relief seat 17),

with the valve body (15) in its position of rest being pressed by a permanent power source (spring 19) against the seat (16) associated with the measuring connection (M) and with the permanent power source (19) being hydraulically disconnectable by admitting pressure to the valve chamber (14).

2. Valve according to claim 1,

characterized in that

the permanent power source (19) is supported on the valve body (15) via a piston (18), whose piston area is exposed to the pressure in the valve chamber (14).

3. Valve according to claim 2,

characterized by

a forcing-off spring (23), by means of which the valve body (15) follows up the piston (18) while the forcing-off spring (23) is supported in the region of the measuring seat (16).

4. Valve according to claim 2 or 3,

characterized in that
the area of the piston (18) exposed to the pressure in the valve chamber (14) is greater than the measuring seat (16).

5. Valve according to claim 4,
characterized in that
the relief seat (17) is greater than the area of the piston (18) exposed to the pressure in the valve chamber (14).

6. Valve according to one of the preceding claims,
characterized in that
the permanent power source is a spring (19), which is supported in a pressure-relieved chamber (20) and whose end facing the valve body (15) takes the form of a piston (18).

7. Valve according to claim 6,
characterized in that
the piston (18) is disposed inside the relief seat (17) in such a concentric manner that, when the valve body (15) is seated on the relief seat (17), said piston is not acted upon by pressure.


## Revendications

1. Soupape de sécurité hydraulique (3) pour fournir une pression de commande hydraulique afin de déclencher une fonction de sécurité en fonction de la pression de travail d'une source de force hydraulique (1) à laquelle elle est reliée par un orifice de mesure (M),
cette soupape de sécurité présentant un orifice de commande hydraulique (S) pour commander la fonction de sécurité et présentant une chambre de soupape (14) et un orifice de décharge (E) pour relier la soupape de sécurité à un système à plus basse pression, par exemple à un réservoir,
caractérisée par le fait
que ladite soupape de sécurité (3) est un sélecteur de circuit, par le fait que l'orifice de commande (S) débouche dans la chambre (14) de la soupape de sécurité (3),
et par le fait que l'orifice de mesure (M), d'une part, et l'orifice de décharge (E), d'autre part, sont obturés de manière mutuellement exclusive par l'organe obturateur (15) de la soupape de sécurité (3), chacun grâce à un siège (siège 16 associé à l'orifice de mesure, siège 17 associé à l'orifice de décharge),
l'organe obturateur (15) étant appliqué sur le siège (16) associé à l'orifice de mesure (M), par une source de force permanente (ressort 19), lorsqu'il est à sa position de repos, et la source de force permanente (19) pouvant être annulée hydrauliquement par application de pression à la chambre de soupape (14).

2. Soupape selon revendication 1,
caractérisée par le fait que
la source de force permanente (19) prend appui contre l'organe obturateur (15) par l'intermédiaire d'un piston (18) dont la face active est exposée à la pression dans la chambre de soupape (14).

3. Soupape selon revendication 2,
caractérisée par
un ressort repousseur (23) qui prend appui dans la région du siège (16) associé à l'orifice de mesure et grâce auquel l'organe obturateur (15) suit le piston (18).

4. Soupape selon revendication 2 ou 3,
caractérisée par le fait que
la surface du piston (18) exposée à la pression dans la chambre de soupape (14) est plus grande que celle du siège associé à l'orifice de mesure (16).

5. Soupape selon revendication 4,
caractérisée par le fait que
le siège (17) associé à l'orifice de décharge est plus grand que la surface du piston (18) exposée à la pression dans la chambre de soupape (14).

6. Soupape selon l'une des revendications précédentes,
caractérisée par le fait que
la source de force permanente est un ressort (19) qui est logé dans une chambre (20) exempte de pression et dont le côté tourné vers l'organe obturateur (15) est réalisé en tant que piston (18).

7. Soupape selon revendication 6,
caractérisée par le fait que
le piston (18) est monté à l'intérieur du siège (17) associé à l'orifice de décharge, concentriquementà ce siège, de manière à ne pas être sollicité par la pression lorsque l'organe obturateur (15) est appliqué sur ledit siège (17) associé à l'orifice de décharge.

FIG.1

FIG.2

EP 0 376 115 B1